# EUROPÄISCHE PATENTANMELDUNG

(11) **EP 2 244 142 A1**
(43) Veröffentlichungstag der Anmeldung: **27.10.2010**
(21) Anmeldenummer: 09158486.2
(22) Anmeldetag: 22.04.2009
(51) Int. Cl.: G05B 19/042, G05B 19/05, G06F 1/32

(54) **Automatisierungssystem mit Energiesparmodus**

(71) Anmelder: SIEMENS AKTIENGESELLSCHAFT, 80333 München (DE)
(72) Erfinder: August, Joachim, 90482, Nürnberg (DE); Brousek, Norbert, 90766, Fürth (DE); Jöhnßen, Oliver, 91058, Erlangen (DE); Ohlmann, Joachim, 91074, Herzogenaurach (DE)

(57) **Zusammenfassung**

Die Erfindung betrifft ein Automatisierungssystem (A) mit einem programmgesteuerten Steuerungssystem (SPS) zur Führung eines technischen Prozesses, einer Prozessschnittstelle (P) zum Austausch von Mess- und Stellsignalen (M1...Mn; T1...Tn) zwischen dem technischen Prozess und dem programmgesteuerten Steuerungssystem (SPS) und Mitteln zur dynamischen Umschaltung des programmgesteuerten Steuerungssystems (SPS) zwischen einer normalen und einer energiesparenden Betriebsart. Die Erfindung bietet den Vorteil, dass statt einer rein zyklischen, dauerhaften Bearbeitung insbesondere von Anwendungsprogrammen in einem Automatisierungssystem nun eine ereignisgesteuerte Bearbeitung vorgenommen wird. Hierzu kann das programmgesteuerte Steuerungssystem dynamisch zwischen einer normalen bzw. einer energiesparenden Betriebsart ungeschaltet werden, also z.B. einer Bearbeitung von Anwenderprogrammen mit vollem bzw. reduziertem Prozessortakt. Bei einer vorteilhaften Ausführung weist das Automatisierungssystem Mittel zur Überwachung der Signalaktivität der Prozessschnittstelle auf. Die Umschaltmittel schalten dann das programmgesteuerte Steuerungssystem abhängig von der Signalaktivität an der Prozessschnittstelle zwischen einer normalen und einer energiesparenden Betriebsart dynamisch um.

## Beschreibung

Die Erfindung betrifft ein Automatisierungssystem.

Ein Automatisierungssystem ist in der Regel über zentrale oder dezentrale Baugruppen mit einer Vielzahl von Sensoren und/oder Aktoren verbunden. Die Sensoren und/oder Aktoren sind an Betriebsmittel eines technischen Prozesses angeschlossen und erfassen zyklisch Prozesssignale, z.B. Eingangswerte in Form von Messwerten, und/oder gegeben Prozesssignale aus, z.B. Ausgangssignale in Form von Stellsignalen. Alle auf diese Weise vom technischen Prozess zyklisch erfassten Eingangssignale werden von einem Betriebsystem des Automatisierungssystems über ein Prozessabbild der Zentraleinheit zur Verfügung gestellt. Diese bearbeitet die Eingangsignale mit Hilfe von einem oder mehreren kundenspezifischen Anwenderprogrammen und erzeugt Ausgangssignale. Das Betriebssystem überträgt nun ebenfalls zyklisch das Prozessabbild der Ausgangssignale an die angeschlossenen Ausgänge der zentralen oder dezentralen Baugruppen. Von dort werden die Signale schließlich in der Regel in Form von Stellsignalen an die im technischen Prozess verteilten Aktoren weiter gegeben. Diese zyklische Prozesssignalverarbeitung erfolgt im Automatisierungssystem kontinuierlich. Die hierzu erforderliche Prozessorauslastung verursacht einen entsprechenden resultierenden Energiebedarf des Automatisierungssystems.

In bestimmten Betriebsphasen einer technischen Anlage, z.B. in Produktionspausen, ändern sich die von Sensoren erfassten Messsignale kaum. Entsprechend werden dem Automatisierungssystem in einem solchen Fall nahezu gleich bleibende Eingangssignale zyklisch zugeführt. Der Bedarf an Automatisierungsaufgaben ist in einer solchen Situation z.B. auf die Bearbeitung von Überwachungen reduziert, etwa die Auswertung der Zustandsignale von Schutztüren u.s.w.. Folglich werden kundenspezifische Anwenderprogramme von der Zentraleinheit des Automatisierungssystems häufig aufgerufen und ausgeführt, ohne dass dies Änderungen an Ausgangsignalen nach sich zieht bzw. konkrete Aktionen auslöst. Im Ergebnis stehen Prozessorauslastung und Energieverbrauch nicht im Einklang mit der aktuellen Dynamik des technischen Prozesses.

Der Erfindung liegt die Aufgabe zu Grunde ein Automatisierungssystem anzugeben, bei dem eine für den zu steuernden Prozess rückwirkungsfreie Optimierung des eigenen Energieverbrauchs möglich ist.

Die Aufgabe wird mit dem in Anspruch 1 angegebenen Automatisierungssystem gelöst. Vorteilhafte weitere Ausführungen der Erfindung sind in den Unteransprüchen angegeben.

Die erfindungsgemäße Gestaltung bietet den Vorteil, dass statt einer rein zyklischen, dauerhaften Bearbeitung insbesondere von Anwendungsprogrammen in einem Automatisierungssystem nun eine ereignisgesteuerte Bearbeitung vorgenommen wird. Hierzu kann das programmgesteuerte Steuerungssystem dynamisch zwischen einer normalen bzw. einer energiesparenden Betriebsart ungeschaltet werden, also z.B. einer Bearbeitung von Anwenderprogrammen mit vollem bzw. reduziertem Prozessortakt. Trotz der temporären Ermöglichung einer energiesparenden Betriebsart, ist die Prozessschnittstelle dennoch aktiv. Bei Bedarf kann somit sofort eine Reaktion auf Ereignisse erfolgen, indem die energiesparende Betriebsart aufgegeben und die volle Rechenleistung des Systems mit dem entsprechenden Verbrauch an elektrischer Energie aktiviert wird. Der Vorteil der Erfindung ist weiterhin, dass die energiesparende Betriebsart keine Rückwirkungen auf den technischen Prozess ausübt.

Bei einer besonders vorteilhaften Ausführung weist das Automatisierungssystem Mittel zur Überwachung der Signalaktivität der Prozessschnittstelle auf. Die Umschaltmittel schalten dann das programmgesteuerte Steuerungssystem abhängig von der Signalaktivität an der Prozessschnittstelle zwischen einer normalen und einer energiesparenden Betriebsart dynamisch um. Wird dabei zur Überwachung der Signalaktivität der Prozessschnittstelle vorteilhaft die Änderungsgeschwindigkeit von Messsignalen des technischen Prozesses ausgewertet, so kann das Automatisierungssystem z.B. in eine energiesparende Betriebsart zurückgeschaltet werden, solange sich die Messsignale z.B. wegen eines vorüber gehenden Prozessstillstandes nicht ändern. Umgekehrt kann die Zentraleinheit selbstständig an einer Änderung der Eingangssignale detektieren, dass wieder Rechenleistung benötigt wird.

Bei einer anderen Ausführung der Erfindung wird zur Überwachung der Signalaktivität der Prozessschnittstelle die Belastung einer Datenbusverbindung zwischen Prozessschnittstelle und programmgesteuertem Steuerungssystem ausgewertet, z.B. der Umfang des Datentransfers auf internen oder externen Datenbussen des Automatisierungssystems. So kann sich die Zentraleinheit des Automatisierungssystems in eine energiesparende Betriebsart zurückschalten, z.B. wenn wegen eines nur geringen Nutzdatenverkehrs auf einem Bus keine oder nur geringe Kommunikationsanforderungen vorliegen. Auch dies kann von der Zentraleinheit selbständig ausgewertet werden. Bei einer erneuten Steigerung der Kommunikationsanforderungen, z.B. einer Zunahme von Anzahl und Umfang empfangener Datenpakete, kann wieder von der energiesparenden in die normale Betriebsart zurückgeschaltet werden.

Bei einer weiteren Ausführung des Automatisierungssystems sind Eingabemittel an das programmgesteuerte Steuerungssystem angeschlossen, z.B. eine Bedien- und Beobachtungseinheit. Hierüber können Zeitbedingungen vorgegeben werden. Abhängig von deren Eintritt können dann die Mittel zur Umschaltung das programmgesteuerte Steuerungssystem zwischen einer normalen und einer energiesparenden Betriebsart dynamisch umschalten. So kann sich z.B. eine Zentraleinheit des Automatisierungssystems also zeitgesteuert zu einer bestimmten Uhrzeit selbstständig in eine energiesparende Betriebsart versetzen. Ein solcher Zeitpunkt kann bei einem Produktionsprozess z.B. nach dem Ende einer Schicht liegen. Umgekehrt kann der Eintritt eines anderen, vorbestimmten Zeitpunkts die Zentraleinheit wieder in den normalen Betriebszustand aktivieren. Ein solcher Zeitpunkt kann bei einem Produktionsprozess z.B. kurz vor Beginn einer Schicht liegen.

Bei einer anderen Ausführung können externe Schaltbedingungen über die Eingabemittel in das programmgesteuerte Steuerungssystem eingegeben werden. Auch in diesem Falle können dann die Mittel zur Umschaltung das programmgesteuerte Steuerungssystem abhängig von deren Eintritt zwischen einer normalen und einer energiesparenden Betriebsart dynamisch umschalten. Beispielhaft können die Eingabemittel eine an das programmgesteuerte Steuerungssystem angeschlossene externe Datenschnittstelle, insbesondere zu einem dem Automatisierungssystem über- oder nebengeordneten Leitsystem, darstellen. Von einem solchen Leitsystem können übergeordnete Schaltbefehle abgeleitet und zur erfindungsgemäßen dynamischen Umschaltung zwischen den Betriebsarten genutzt werden.

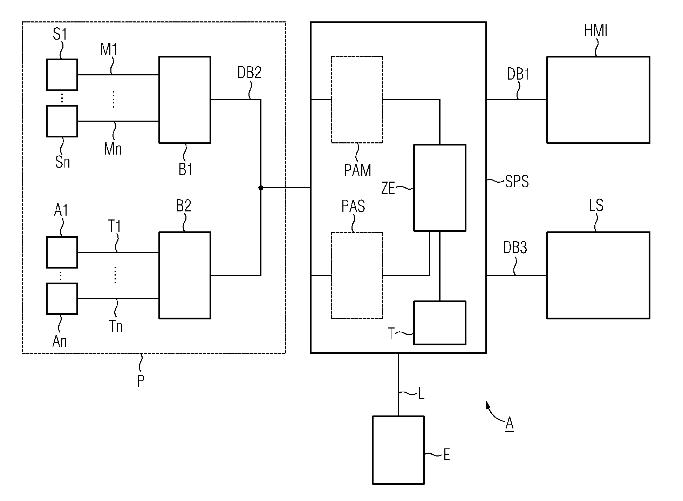

Der Erfindung wird an Hand eines in der Figur dargestellten beispielhaften Automatisierungssystems A näher erläutert. Dieses enthält ein programmgesteuertes Steuerungssystem SPS, besonders eine speicherprogrammierbare Steuerung, zur Führung eines technischen Prozesses. Das Steuerungssystem weist beispielhaft eine von einem Systemtakt T betriebene Zentraleinheit ZE auf, und wird über eine Versorgungsleitung L von einer Energieversorgung E gespeist. Zur Wahrnehmung von anwendungsabhängigen Mess- und Steuerungsaufgaben wird von der Zentraleinheit vorteilhaft ein Prozessabbild für Messsignale PAM und ein Prozessabbild für Stellsignale PAS programmtechnisch verwaltet. Eine Umschaltung zwischen einer normalen bzw. energiesparenden Betriebsart kann z.B. durch eine dynamische Erhöhung bzw. Reduktion des Systemtakts T erfolgen.

Das Steuerungssystem SPS ist an einen technischen Prozess über eine Prozessschnittstelle P angekoppelt, welche im Beispiel der Figur zwei Schnittstellenbaugruppen B1 bzw. B2 aufweist, z.B. eine analoge Messwerteeingabebaugruppe bzw. Stellsignalausgabebaugruppe. In den Baugruppen B1, B2 sind entsprechende Module, z.B. Analogeingaben bzw. Digitalausgaben gesteckt und über z.B. einen als Rückwandbus ausgeführten Datenbus DB2 untereinander und mit dem Steuerungssystem SPS datentechnisch verbunden. An die Module in den Peripheriebaugruppen B1 bzw. B2 sind beispielhaft Sensoren S1...Sn über Messsignalleitungen M1...Mn bzw. Aktoren A1...An über Stellsignalleitungen T1...Tn angekoppelt.

Gemäß der oben dargestellten vorteilhaften Ausführung der Erfindung können vom Steuerungssystem SPS z.B. direkt die Signalaktivitäten auf den Messsignalleitungen M1...Mn oder z.B. indirekt der Datenumsatz auf dem Datenbus DB2 zum Zwecke der Erkennung einer Umschaltsituation zwischen einer normalen bzw. energiesparenden Betriebsart ausgewertet werden. Diese Überwachungsmittel können programmtechnisch z.B. von der Zentraleinheit ZE des Steuerungssystems SPS ausgeführt werden, ohne dass dabei die anwenderspezifischen Prozessabbilder für Mess- bzw. Stellsignale PAM PAS in irgend einer Weise beeinträchtigt werden.

Das in der Figur dargestellte beispielhafte Automatisierungssystem A ist zudem über eine weitere Datenbusschnittstelle DB1 mit einer Bedien- und Beobachtungseinheit HMI, z.B. einem Touchdisplay mit programmgesteuerter Verarbeitungseinheit, und über eine externe Datenschnittstelle DB3, insbesondere eine Prozessbusschnittstelle, mit einem über- oder nebengeordnetes Leitsystem LS verbunden. Erfindungsgemäß können sowohl die Bedien- und Beobachtungseinheit HMI als auch das Leitsystem LS als Eingabemittel dienen, um z.B. Schaltbefehle bzw. Zeitbedingungen zur Aktivierung bzw. Deaktivierung einer energiesparenden Betriebsart vorzugeben.

## Patentansprüche

1. Automatisierungssystem (A) mit
- einem programmgesteuerten Steuerungssystem (SPS) zur Führung eines technischen Prozesses,
- einer Prozessschnittstelle (P) zum Austausch von Mess- und Stellsignalen (M1...Mn; T1...Tn) zwischen dem technischen Prozess und dem programmgesteuerten Steuerungssystem (SPS), und
- Mitteln zur dynamischen Umschaltung des programmgesteuerten Steuerungssystems (SPS) zwischen einer normalen und einer energiesparenden Betriebsart.

2. Automatisierungssystem (A), nach Anspruch 1 mit
- Mitteln zur Überwachung der Signalaktivität der Prozessschnittstelle (P), wobei
- die Mittel zur Umschaltung das programmgesteuerte Steuerungssystem (SPS) abhängig von der Signalaktivität an der Prozessschnittstelle (P) zwischen einer normalen und einer energiesparenden Betriebsart dynamisch umschalten.

3. Automatisierungssystem (A) nach Anspruch 2, wobei zur Überwachung der Signalaktivität der Prozessschnittstelle (P) die Änderungsgeschwindigkeit von Messsignalen des technischen Prozesses ausgewertet wird.

4. Automatisierungssystem (A) nach Anspruch 2 oder 3, wobei zur Überwachung der Signalaktivität der Prozessschnittstelle (P) die Belastung einer Datenbusverbindung (DB2) zwischen Prozessschnittstelle (P) und programmgesteuertem Steuerungssystem (SPS) ausgewertet wird.

5. Automatisierungssystem (A) nach einem der vorangegangen Ansprüche, wobei
- Eingabemittel (H) an das programmgesteuerte Steuerungssystem (SPS) angeschlossen sind, und
- die Mittel zur Umschaltung das programmgesteuerte Steuerungssystem (SPS) abhängig vom Eintritt einer zeitlichen Bedingung, welche über die Eingabemittel vorgegeben ist, zwischen einer normalen und einer energiesparenden Betriebsart dynamisch umschalten.

6. Automatisierungssystem (A) nach Anspruch 5, wobei die Eingabemittel (H) eine das programmgesteuerte Steuerungssystem (SPS) angeschlossene Bedien- und Beobachtungseinheit (HMI) darstellen.

7. Automatisierungssystem (A) nach einem der vorangegangen Ansprüche 1 bis 4, wobei
- Eingabemittel (H) an das programmgesteuerte Steuerungssystem (SPS) angeschlossen sind, und
- die Mittel zur Umschaltung das programmgesteuerte Steuerungssystem (SPS) abhängig vom Eintritt einer externen Schaltbedingung, welche über die Eingabemittel vorgegeben ist, zwischen einer normalen und einer energiesparenden Betriebsart dynamisch umschalten.

8. Automatisierungssystem (A) nach Anspruch 7, wobei die Eingabemittel (H) eine das programmgesteuerte Steuerungssystem (SPS) angeschlossene externe Datenschnittstelle (DB3), insbesondere zu einem dem Automatisierungssystem (A) über- oder nebengeordneten Leitsystem (LS), darstellen.
